# FASCICULE DE BREVET EUROPEEN

(11) **EP 2 193 231 B1**
(45) Date de publication et mention de la délivrance du brevet: **05.11.2014**
(21) Numéro de dépôt: 08837937.5
(22) Date de dépôt: 18.09.2008
(51) Int. Cl.: D04H 13/00, D04H 18/00, B32B 5/26, B32B 5/06, B32B 7/08, B29C 70/24

(54) **PANNEAU A FORTE RESISTANCE STRUCTURELLE, DISPOSITIF ET PROCEDE POUR FABRIQUER UN TEL PANNEAU**
PLATTE MIT STRUKTURELLER BESTÄNDIGKEIT, VORRICHTUNG UND VERFAHREN ZUR HERSTELLUNG
PANEL WITH HIGH STRUCTURAL STRENGTH, AND DEVICE AND METHOD FOR MAKING SUCH PANEL

(30) Priorité: 18.09.2007 FR 0757658
(43) Date de publication de la demande: 09.06.2010
(73) Titulaire: Le Roy, Guy, 75003 Paris (FR)
(72) Inventeur: Le Roy, Guy, 75003 Paris (FR)
(74) Mandataire: Pontet Allano & Associes
(86) Numéro de dépôt international: PCT/FR2008/051670
(87) Numéro de publication internationale: WO 2009/047449

(56) Documents cités:
- EP-A- 0 556 088
- EP-A- 0 611 741
- EP-A- 1 686 210
- FR-A- 2 678 547
- FR-A- 2 782 528

## Description

La présente invention concerne un panneau composite.

La présente invention concerne également un dispositif pour fabriquer un tel panneau.

La présente invention concerne encore un procédé pour réaliser le panneau composite.

Les panneaux composites dits « sandwich », bien connus, comprennent deux peaux résistantes à divers efforts, placées de part et d'autre d'une âme qui est typiquement en mousse ou en feutre. Les peaux comprennent une armature fibreuse imprégnée d'une résine qui confère à ces peaux une certaine rigidité intrinsèque ainsi qu'une liaison avec l'âme.

Ces panneaux sont très répandus dans des applications où il faut réaliser des parois rigides, légères, durables, résistantes aux chocs, etc.

L'âme a notamment pour fonction de maintenir une distance sensiblement fixe entre les deux peaux. En conséquence, le panneau ne peut fléchir que dans la mesure où la peau radicalement extérieure (relativement à l'axe de flexion) est capable de s'étirer, et la peau radialement intérieure capable de se contracter. Comme les peaux ont une faible aptitude à s'étirer et à se contracter, le panneau est rigide en flexion.

Toutefois, les panneaux connus sont soumis au risque dit de « délamination » consistant en ce que, notamment sous un effort de flexion, l'une au moins des peaux se désolidarise de l'âme. Dans ce cas, les caractéristiques mécaniques du panneau se dégradent de manière inacceptable.

Pour remédier à cette difficulté, on a proposé de créer une liaison mécanique entre chaque peau et l'âme. On a par exemple proposé de réaliser une couture entre l'armature fibreuse de la peau et l'âme, avant l'étape d'imprégnation des peaux par la résine. De tels procédés ont une certaine efficacité, mais ils nécessitent des opérations supplémentaires avec des machines complexes et relativement lentes qui accroissent considérablement l'investissement industriel et le temps nécessaire pour la fabrication d'un panneau. Les panneaux ainsi renforcés sont donc coûteux.

On connaît le document EP 1 686 210 A1 qui décrit des panneaux composites dans lesquels une âme pulvérulente ou fibreuse est stabilisée entre deux peaux par une opération d'aiguilletage traversante, cet aiguilletage faisant pénétrer dans la matière de l'âme et perpendiculairement au plan de l'âme des fibres provenant des peaux. Cependant, ces structures peuvent se dégrader lorsqu'elles sont soumises à certaines contraintes.

Le but de la présente invention est ainsi de proposer un panneau composite offrant des caractéristiques mécaniques améliorées, ainsi qu'un dispositif et un procédé de fabrication d'un tel panneau.

Cet objectif est atteint avec un panneau composite, comprenant deux peaux fibreuses, et une âme placée dans un volume intercalaire entre les peaux et reliée aux peaux par une matière liante solidifiée, dans lequel des fibres de liaison originaires de l'une au moins des peaux ont été enfoncées dans le volume intercalaire entre les peaux, caractérisé en ce qu'une partie au moins des fibres enfoncées présente au moins une orientation oblique par rapport à l'une au moins des peaux.

Les fibres enfoncées se comportent comme un enracinement de chaque peau dans l'âme. Cet enracinement s'oppose efficacement au délaminage du panneau.

Dans ce document, on dit qu'une orientation est oblique par rapport à une peau si cette orientation est oblique par rapport à la surface de cette peau, c'est à dire de biais par rapport à la surface de cette peau, c'est-à-dire non perpendiculaire à la surface de cette peau. Selon l'invention, l'au moins une orientation oblique renforce considérablement la résistance mécanique du panneau selon l'invention par rapport aux panneaux dé l'art antérieur.

L'âme peut comprendre au moins un élément de forme préétablie définissant au moins une face d'appui géométriquement définie pour l'une au moins des peaux.

De manière préférentielle, les fibres enfoncées présentent au moins deux orientations différentes. Les deux orientations peuvent comprendre une orientation sensiblement perpendiculaire à l'une au moins des peaux. Les deux orientations sont de préférence inclinées en sens contraire l'une de l'autre par rapport aux peaux. Dans ce document, on dit que deux orientations sont inclinées en sens contraires l'une de l'autre par rapport à une peau si elles sont inclinées en sens contraires par rapport à une normale à la surface de cette peau. Dans un mode de réalisation, des fibres enfoncées selon une première orientation sont sensiblement parallèles à un premier plan d'orientation, des fibres enfoncées selon une deuxième orientation (différente de la première) sont sensiblement parallèles à un deuxième plan d'orientation, le premier plan d'orientation et le deuxième plan d'orientation étant transverses (de préférence sensiblement perpendiculaires) l'un à l'autre, les fibres selon la première orientation et les fibres selon la deuxième orientation étant toutes sensiblement parallèles à un plan d'alignement transverse aux plans d'orientation, ce plan d'alignement étant de préférence sensiblement perpendiculaire à la surface d'au moins une des peaux. De même, dans un mode de réalisation, des fibres enfoncées selon une première orientation sont sensiblement parallèles à un premier plan d'alignement sensiblement perpendiculaire à la surface d'au moins une des peaux, des fibres enfoncées selon une deuxième orientation (différente de la première) sont sensiblement parallèles à un deuxième plan d'alignement sensiblement perpendiculaire à la surface de cette même au moins une des peaux, le premier plan et le deuxième plan d'alignement étant transverses (de préférence sensiblement perpendiculaires) l'un à l'autre.

De préférence, les fibres enfoncées sont regroupées en touffes situées en des sites où se trouve également de la matière liante. Dans ce cas, les fibres enfoncées présentent au moins deux orientations différentes. Des touffes de fibres enfoncées selon une première orientation sont de préférence chacune sécantes ou tangentes à une touffe de fibres enfoncées selon une deuxième orientation. Cela permet une liaison, par la matière liante, entre des touffes de la première et de la deuxième orientation au niveau d'au moins un point de jonction entre touffes, ce qui améliore considérablement la résistance structurelle du panneau selon l'invention en comparaison des panneaux de l'art antérieur.

La matière liante peut être en résine, un liant, une résine moussée, etc. dont on imprègne le panneau après le processus d'enfoncement des fibres, ou encore une matière obtenue par modification des fibres, par exemple un composant des fibres qui fond lorsqu'on expose les fibres à la chaleur. La matière liante assure une consolidation des peaux et une stratification du panneau.

De préférence, les fibres enfoncées se trouvent le long de motifs géométriques tels que rangées, carreaux, points en quinconce. La nature de ces motifs, ainsi que la dimension du motif élémentaire, permettent de renforcer plus ou moins certaines zones du panneau, et/ou le panneau tout entier.

L'âme est typiquement, mais non limitativement, en mousse. Bien que ce matériau soit préférable dans la plupart des applications, il n'est nullement obligatoire selon l'invention. Virtuellement tout matériau permet l'application de l'invention. L'âme peut par exemple inclure au moins un matériau parmi de la mousse, des matériaux rigides, des matériaux fluides ou semi-fluides tels que des matières pulvérulentes, des émulsions de poudres, des matériaux thermoplastiques, thermofusibles ou thermodurs. On peut par ailleurs envisager que l'âme comprenne des intercalaires, des inserts, des tubes ou encore des renforts rigides.

Sous le terme « peau », on entend de préférence une couche ayant une dimension d'épaisseur relativement faible par rapport à deux autres dimensions rectilignes ou curvilignes définissant une surface telles qu'une longueur et une largeur. Ainsi, une peau peut généralement être assimilée sensiblement à une surface. Une peau comprend au minimum une nappe de fibres. La nappe de fibre peut être noyée dans une matière liante comme par exemple une résine. Une au moins des peaux peut être multicouche. Une peau peut par exemple comporter un textile destiné à fournir les fibres enfoncées et au moins une partie de la résistance mécanique de la peau à l'encontre de la traction, et une couche d'une autre nature, ayant par exemple au moins une fonction isolante, imperméabilisante anti-effraction, esthétique, de résistance mécanique complémentaire, anti-feu, et/ou etc. Ladite autre couche peut être placée du côté de l'âme ou du côté opposé, par rapport à l'armature fibreuse. On peut envisager l'emploi de peaux de nature et/ou de poids différents au sein d'un même panneau composite.

Il est encore possible de réaliser un panneau comportant au moins deux âmes superposées avec éventuellement une peau intérieure, en particulier fibreuse, intercalée entre les deux âmes. Dans ce cas les fibres de liaison peuvent être enfoncées jusqu'à venir se raccorder à cette peau intérieure, en formant ainsi un pont entre la peau extérieure et la peau intérieure.

Les fibres des peaux d'un panneau selon l'invention peuvent être de toutes natures. On privilégie de préférence pour les nappes de fibres des matériaux fibreux non tissés disponibles qu'ils soient de nature organique ou minérale, tels que: des fibres métalliques, animales, végétales, plastiques, textiles, carbones etc.

Selon un autre aspect de l'invention, il est proposé un dispositif pour fabriquer un panneau selon l'invention, caractérisé en ce qu'il comprend :
- des moyens d'introduction pour introduire une âme entre deux peaux fibreuses dans un trajet d'aiguilletage selon une direction de défilement, l'âme (3) comprenant de préférence au moins un élément préformé
- au moins une unité d'aiguilletage comprenant des aiguilles et agencée pour enfoncer des fibres de l'une au moins des peaux dans un volume situé entre les peaux, de préférence à un poste de travail où les peaux sont soutenues par l'au moins un élément préformé de l'âme, l'au moins une unité d'aiguilletage comprenant des moyens pour actionner ses aiguilles obliquement selon une inclinaison de frappe par rapport à un plan de défilement de l'âme et des peaux.

Selon l'invention, les moyens pour actionner les aiguilles obliquement permettent d'enfoncer obliquement dans l'âme des fibres provenant d'au moins une des peaux, ce qui de permet de renforcer considérablement la résistance mécanique du panneau fabriqué et facilite un drainage et une dispersion de matière liante au niveau de sites ou touffes de fibres enfoncées.

L'au moins une unité d'aiguilletage peut comprendre des moyens pour régler l'inclinaison de frappe suivant laquelle ses aiguilles sont actionnées, par rapport audit plan de défilement.

Le dispositif selon l'invention peut comprendre deux unités d'aiguilletage disposées de part et d'autre du plan de défilement. Les deux unités peuvent être réglables en inclinaison de frappe indépendamment l'une de l'autre. Les deux unités peuvent être commandées à partir d'un même arbre, le dispositif comportant des moyens pour régler un calage des cycles de frappe des deux unités l'une par rapport à l'autre, en particulier en fonction de leur inclinaison de frappe respective. Les deux unités d'aiguilletage peuvent être agencées pour orienter une pénétration de leurs aiguilles dans l'âme en partie selon la direction de défilement de l'âme et des peaux, ou en partie selon une direction opposée à la direction de défilement de l'âme et des peaux. Enfin, une première de ces unités d'aiguilletage peut être agencée pour enfoncer des touffes de fibres selon une première orientation, et une deuxième de ces unités d'aiguilletage peut être agencée pour enfoncer des touffes de fibres selon une deuxième orientation, de sorte que les touffes selon la première orientation sont chacune sécantes ou tangentes à au moins une touffe de fibres enfoncées selon la deuxième orientation.

Les pointes des aiguilles de l'au moins une unité d'aiguilletage sont de préférence dans un plan sensiblement parallèle au plan de défilement.

Les aiguilles peuvent être d'égale longueur et avoir chacune un talon appuyé contre une face arrière d'une planche à aiguilles, cette face arrière étant généralement sensiblement parallèle au plan de défilement. De préférence, la face arrière de la planche à aiguilles comporte des conformations d'appui et de positionnement pour les talons des aiguilles. Le dispositif selon l'invention peut comprendre en outre des moyens pour changer la face arrière de l'au moins une unité d'aiguilletage. Cela peut notamment permettre d'adapter cette unité d'aiguilletage à différentes inclinaisons de frappe, de sorte que, pour ces différentes inclinaisons, la face arrière de cette unité soit toujours sensiblement parallèle au plan de défilement, c'est-à-dire que les pointes des aiguilles de cette unité soient contenues dans un plan toujours sensiblement parallèle au plan de défilement.

L'au moins une unité d'aiguilletage peut présenter un biseau le long d'un bord qui est transversal au plan de défilement et qui fait face au plan de défilement.

Les moyens d'actionnement peuvent comprendre au moins une courroie passant autour d'une poulie portée par un arbre disposé transversalement par rapport à la direction de défilement de l'âme et des peaux, l'au moins une unité d'aiguilletage comprenant au moins un équipage mobile, portant les aiguilles, fixé à un brin de la courroie, et l'inclinaison de frappe peut être réglable par basculement de l'unité d'aiguilletage autour de l'axe de l'arbre. En outre, les moyens d'actionnement peuvent comprendre une seconde courroie passant autour d'une seconde poulie portée par le même arbre et accouplée à un équipage mobile d'une seconde unité d'aiguilletage agissant de l'autre côté du plan de défilement. L'arbre peut être situé d'un côté du plan de défilement, l'équipage mobile situé du même côté du plan que l'arbre étant de préférence essentiellement situé à l'extérieur de la boucle formée par la courroie correspondante, et l'autre équipage mobile étant de préférence essentiellement situé à l'intérieur de la boucle formée par la courroie correspondante.

Selon encore un autre aspect de l'invention, il est proposé un procédé pour réaliser un panneau composite selon l'invention, caractérisé en ce que, par aiguilletage, on enfonce obliquement des touffes de fibres de l'une au moins des peaux dans le volume intercalaire où se trouve l'âme. En enfonçant obliquement des touffes de fibres, on renforce considérablement la résistance mécanique du panneau fabriqué par le procédé selon l'invention et on facilite un drainage et une dispersion de matière liante au niveau des touffes de fibres enfoncées.

On peut enfoncer des touffes de fibres suivant au moins deux orientations différentes, en particulier par exécution de deux passes d'aiguilletage séparées par un pivotement du panneau (de préférence de sensiblement 90 degrés) dans son propre plan, des fibres enfoncées selon une première orientation étant sensiblement parallèles à un premier plan d'alignement sensiblement perpendiculaire à la surface d'au moins une des peaux, des fibres enfoncées selon une deuxième orientation (différente de la première) étant sensiblement parallèles à un deuxième plan d'alignement sensiblement perpendiculaire à la surface de cette même au moins une des peaux, le premier plan d'alignement et le deuxième plan d'alignement étant transverses (de préférence sensiblement perpendiculaires) l'un à l'autre.

Enfin, le procédé selon l'invention peut comprendre un enfoncement de touffes de fibres selon une première orientation, et un enfoncement de touffes de fibres selon une deuxième orientation, de sorte que les touffes selon la première orientation sont chacune sécantes ou tangentes à au moins une touffe de fibres enfoncées selon la deuxième orientation. Ces différents enfoncements peuvent être réalisés en une passe dans un dispositif de fabrication selon l'invention comprenant au moins deux unités d'aiguilletage, ou par exécution, dans un dispositif de fabrication selon l'invention comprenant au moins une unité d'aiguilletage, d'au moins deux passes d'aiguilletage séparées par un pivotement du panneau dans son propre plan.

On peut prévoir dans le cas d'un matériau composant l'âme relativement dur que des évidements soient préalablement pratiqués dans ce matériau en des sites prévus pour enfoncer des fibres.

Il est possible de n'enfoncer les fibres que sur une partie de l'épaisseur du volume intercalaire. Ceci est avantageux pour des panneaux de forte épaisseur.

De préférence, les fibres enfoncées forment des ponts reliant les deux peaux ensemble. Pour cela, on peut faire en sorte que les fibres d'une peau rejoignent et s'implantent dans l'armature fibreuse de l'autre peau pour réaliser entre les deux peaux une liaison par aiguilletage.

On connaît des fibres bi-composant comportant une périphérie sensible à une influence extérieure, par exemple thermofusible, et un noyau central résistant à ladite influence. Dans ce cas la périphérie de la fibre sert selon l'invention de matière liante.

Mais dans la plupart des cas, selon l'invention, la matière liante est une matière d'imprégnation ajoutée à un stade postérieur à l'enfoncement des fibres, telle que résine. De préférence, selon l'invention, on insère alors les fibres dans des évidements formés dans l'âme d'une manière qui favorisera l'invasion ultérieure par la résine, lors de l'imprégnation.

D'autres particularités et avantages de l'invention ressortiront encore de la description ci-après, relative à des exemples non limitatifs.

Aux dessins annexés :
- la figure 1 est une vue en perspective, avec arrachement, d'un mode de réalisation préférentiel de panneau selon l'invention ;
- la figure 2 est une vue en perspective de la structure fibreuse du panneau de la figure 1 ;
- la figure 3 montre en coupe, à échelle agrandie, un détail du panneau de la figure 1, en un site d'enfoncement des fibres ;
- les figures 4 et 5 sont des vues partielles en coupe longitudinale d'un mode de réalisation préférentiel de dispositif de fabrication selon l'invention, représentant un outillage d'aiguilletage munis de deux unités d'aiguilletages, l'outil d'aiguilletage étant respectivement en position de retrait et en position de pénétration maximale;
- la figure 6 est un agrandissement d'un partie des figures 4 et 5, montrant une vue en coupe du dispositif de fixation des aiguilles ;
- la figure 7 est une vue partielle en coupe longitudinale de la répartition de touffes ponctuelles dans l'âme obtenue selon la disposition des unités d'aiguilletages représentées aux figures 4 et 5;
- les figures 8 et 10 sont des vues partielles en coupe longitudinale du dispositif des figures 4 et 5, représentant l'outillage d'aiguilletage des figures 4 et 5 et un dispositif de commande ;
- la figure 9 est une vue partielle en coupe longitudinale de la répartition des touffes ponctuelles dans l'âme obtenue selon la disposition des unités d'aiguilletages représentée à la figure 8;
- la figure 11 est une vue partielle en coupe longitudinale de la répartition des touffes ponctuelles dans l'âme obtenue selon la disposition des unités d'aiguilletages représentée à la figure 10;
- la figure 12 est une vue en coupe latérale du dispositif de commande des figures 8 et 10 ;
- les figures 13 et 14 sont des vues partielles en coupe longitudinale du dispositif des figures 4, 5, 8 et 10, représentant l'outillage d'aiguilletage et des moyens d'introduction ;
- la figure 15 est une vue partielle de dessus en bout à l'extrémité gauche de la figure 13;
- la figure 16 est une vue d'ensemble du dispositif de fabrication selon l'invention, en élévation latérale schématique ;
- la figure 17 est une vue analogue à la figure 13 mais relative à une version perfectionnée; et
- la figure 18 est une vue partielle de dessus, d'un peigne de guidage du dispositif selon la figure 17.

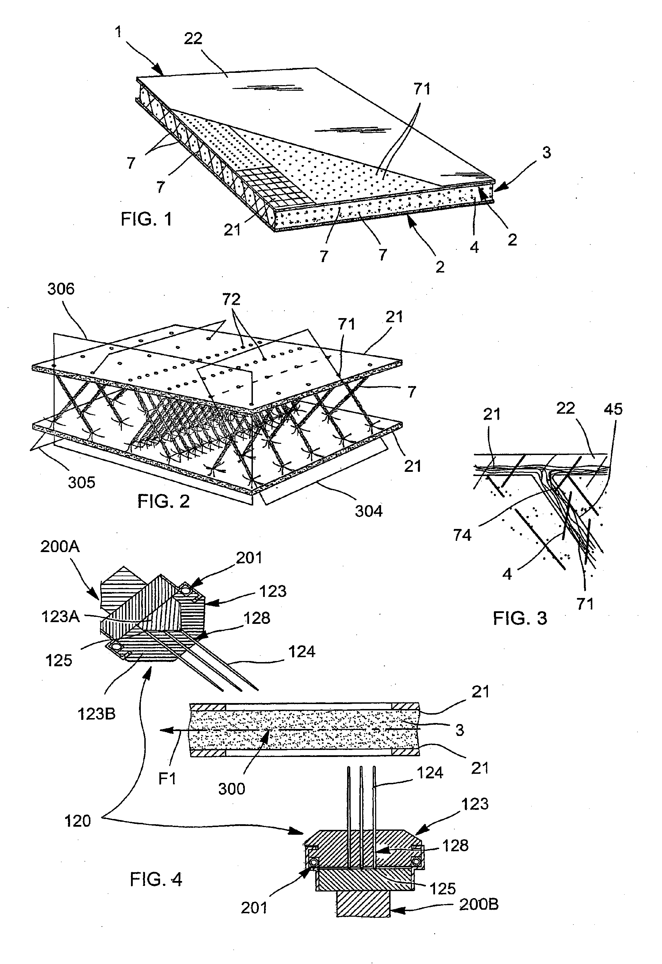

On va maintenant décrire, en référence aux figures 1, 2 et 3, un mode de réalisation de panneau 1 selon l'invention. Sous le terme « panneau », on entend suivant l'invention un matériau composite ayant une dimension d'épaisseur relativement faible par rapport à deux autres dimensions rectilignes ou curvilignes telles qu'une longueur et une largeur. En particulier, le mot « panneau » ne limite pas l'objet visé à un objet plein, ni à un objet d'épaisseur constante.

Le panneau composite 1 comprend deux peaux 2 s'étendant dans des plans parallèles et définissant entre elles un volume intercalaire occupé par une âme 3. Dans l'exemple représenté, l'âme 3 est composée d'une plaque de mousse 4.

Chaque peau 2 consiste en une nappe de fibres 21 qui est noyée dans une matière liante telle qu'une résine 22. A la figure 1, la résine 22 est schématiquement représentée superposée à la nappe de fibres 21. En pratique, comme le montre la figure 3, la résine 22 imprègne les fibres 21 et réalise ainsi une solidification de l'ensemble fibre-résine ainsi qu'une solidarisation de cet ensemble avec la surface de l'âme 3. Selon la nature de la mousse, qui peut par exemple être à pores ouverts ou à pores fermés, et la nature de la matière liante 22, cette dernière peut imprégner ou non les régions de la mousse 4 qui sont limitrophes avec les peaux 2. La figure 3 illustre une certaine imprégnation de ces régions limitrophes.

Conformément à l'invention, le panneau composite 1 comprend des fibres 7 qui proviennent de l'une et/ou l'autre des nappes 21 et qui lors de la fabrication du panneau ont été enfoncées dans l'âme 3. Une partie au moins des fibres est enfoncée suivant au moins une orientation oblique par rapport au plan des peaux 2, dans le volume intercalaire occupé par l'âme 3 entre les peaux.

Les fibres enfoncées 7 sont regroupées en touffes ponctuelles 71 disposées selon un motif de colonnes longitudinales et d'alignements transversaux, avec dans l'exemple particulier de la figure 1 une disposition en quinconce dans une partie de la plaque 4, et une disposition plus serrée avec motifs élémentaires en carré le long de l'un des côtés de la plaque. D'une manière générale, il est prévu que les fibres enfoncées sont réparties suivant un motif et une densité choisie à volonté dans chaque zone du panneau. On peut même envisager de créer des zones transversales ou longitudinales différenciées, par exemple en adoptant une répartition des aiguilles appropriée ou en modulant la vitesse d'avance d'un panneau à travers le dispositif de fabrication qui sera décrit plus loin.

Les fibres enfoncées 7 de l'exemple de la figure 1 s'étendent de l'une à l'autre des deux peaux 2 en formant des ponts de fibres entre les deux peaux à chaque site d'implantation des touffes 71. La figure 2, qui représente la structure fibreuse du panneau 1, montre que chaque pont crée une liaison fibreuse entre les deux nappes de fibres 21. Dans l'exemple de la figure 2, le motif d'implantation des touffes ponctuelles 71 est en carré et non pas en quinconce.

Les fibres enfoncées 7 du panneau 1 sont toutes contenues dans un ensemble de plans parallèles entre eux et sont orientées de manière oblique par rapport à la surface des peaux 2, selon deux orientations inclinées en sens contraire l'une de l'autre, de sorte que les touffes 71 sont sécantes ou du moins tangentes au moins deux par deux.

Des touffes de fibres enfoncées selon une première orientation sont sensiblement parallèles à un premier plan d'orientation 304, des touffes de fibres enfoncées selon une deuxième orientation sont sensiblement parallèles à un deuxième plan d'orientation 305, le premier pian d'orientation et le deuxième plan d'orientation étant sensiblement perpendiculaires l'un à l'autre, les fibres selon la première orientation et les fibres selon la deuxième orientation étant toutes sensiblement parallèles à un plan d'alignement 306 transverse aux plans d'orientation 304, 305 et sensiblement perpendiculaire aux peaux 21. Par ce moyen d'assemblage en X des touffes du panneau composite, les efforts provoqués sur le produit fini sont répartis et transmis différemment des panneaux de l'état de l'art antérieur, de sorte que la résistance structurelle du produit s'en trouve améliorée comparativement aux structures à liaisons perpendiculaires aux peaux. De manière préférentielle, les touffes 71 sont comprises dans un nombre finis de plans parallèles au plan d'alignement 306 et distants entre eux de quelques dixièmes de millimètres.

On peut envisager d'insérer les touffes ponctuelles 71 suivant plus de deux orientations différentes. On peut ainsi envisager que l'une au moins des touffes ponctuelles 71 soit insérée suivant une orientation perpendiculaire par rapport au plan des peaux 2. Enfin on peut envisager que les touffes 71 ne soient pas sécantes, en raison par exemple de leur espacement ou d'orientations incluses dans des plans différents, ou bien au contraire qu'une touffe 71 soit sécante à plus d'une autre touffe 71. On obtient alors des assemblages respectivement appelés en V ou en croisillons.

On peut également envisager un panneau réalisé par un dispositif de fabrication selon l'invention, par une exécution de plusieurs passes d'aiguilletage du panneau séparées par un pivotement du panneau dans son propre plan, permettant d'obtenir des performances optimisées du panneau suivant plusieurs directions. Le panneau obtenu par plusieurs passes comprend au moins:
- des fibres enfoncées selon au moins une première orientation sensiblement parallèle à un premier plan d'alignement sensiblement perpendiculaire à la surface d'au moins une des peaux, ce premier plan d'alignement étant parallèle à la direction de défilement du panneau lors d'une première passe,
- des fibres enfoncées selon au moins une deuxième orientation sensiblement parallèle à un deuxième plan d'alignement sensiblement perpendiculaire à la surface de cette même au moins une des peaux, ce deuxième plan d'alignement étant parallèle à la direction de défilement du panneau lors d'une deuxième passe,
le premier plan d'alignement et le deuxième plan d'alignement étant transverses l'un à l'autre, et étant de préférence perpendiculaires dans le cas où les deux passes d'aiguilletage du panneau sont séparées par un pivotement du panneau de 90 degrés dans son propre plan. Un tel panneau possède des caractéristiques mécaniques mieux équilibrées dans l'espace, car ce panneau est renforcé selon plusieurs directions.

Dans l'exemple représenté, les touffes ponctuelles 71 sont insérées dans la masse des plaques de mousse 4 sans qu'il y ait eu préparation par un évidement préalable. On peut envisager d'insérer les touffes ponctuelles 71 dans des intervalles préalablement ménagés dans la plaque de mousse 4.

L'imprégnation des nappes de fibres avec la matière liante 22 a pour effet de faire pénétrer de la matière liante dans l'âme 3 le long des sites occupés par les touffes 71. Cette pénétration est permise grâce aux puits 45 (figure 3) formés dans l'âme 3 lors de l'enfoncement des fibres 7 comme on le décrira plus loin.

La matière liante 74 qui noie les fibres enfoncées 71 a pour effet de fixer intimement ces fibres enfoncées avec les matériaux avoisinants appartenant à l'âme 3, donc dans l'exemple la mousse 4. On réalise ainsi un accrochage entre l'âme 3 et chaque peau et il en résulte une résistance particulièrement élevée du panneau à l'encontre de la délamination. En outre, dans le cas de fibres enfoncées 7 formant des ponts entre les deux peaux, il est également réalisé un accrochage des deux peaux l'une à l'autre. Plus particulièrement, dans le cas représenté où les fibres d'un pont sont des fibres prélevées dans l'une des peaux et enfoncées à travers l'âme 3 jusqu'à atteindre l'autre peau, l'imprégnation de résine réalise ensuite une fixation entre les fibres enfoncées et ladite autre peau.

Dans le cas qui est le plus général, d'une matière liante dont la performance en traction est supérieure à la performance en cisaillement, l'orientation oblique des fibres enfoncées 71 relativement aux peaux à pour effet d'accroitre la résistance aux contraintes, notamment aux contraintes tendant à exercer un mouvement relatif d'une peau par rapport à l'autre.

On va maintenant décrire en référence aux figures 4, 5 et 6 un outillage d'aiguilletage 120 appartenant à un mode de réalisation préférentiel de dispositif de fabrication selon l'invention destiné à assembler l'âme 3 avec deux peaux comprenant chacune une nappe fibreuse 21 dénuée dans un premier temps de matière liante rigidifiée. Le dispositif de fabrication représenté comprend en outre des moyens d'introduction pour introduire l'âme entre les deux peaux fibreuses 21 dans un trajet d'aiguilletage, l'âme 3 et les nappes 21 défilant sensiblement dans un plan de défilement 300 selon une direction de défilement F1.

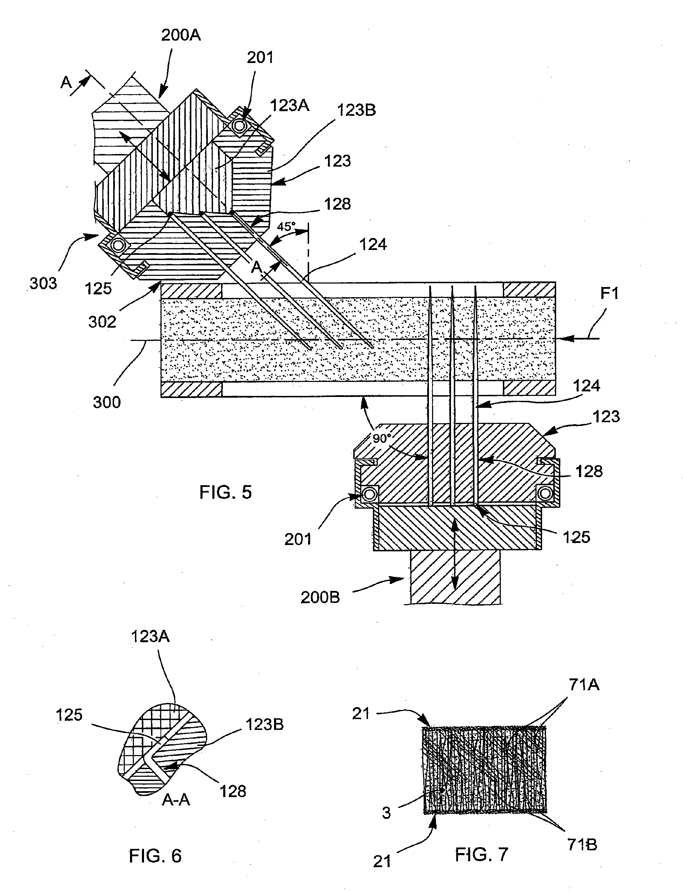

L'outillage d'aiguilletage 120 est composé de deux unités d'aiguilletage 200A, 200B situées de part et d'autre des deux nappes de fibres 21 s'étendant dans des plans parallèles et définissant entre elles un volume intercalaire occupé par l'âme 3. Chacune des dites unités d'aiguilletage comporte notamment des aiguilles 124 d'égale longueur montées solidairement à une planche à aiguilles 123. La figure 6 est un agrandissement d'une partie des figures 4 et 5 selon le plan de coupe A-A, détaillant le dispositif de fixation des aiguilles. Comme illustré, pour l'unité d'aiguilletage 200A:
- la face arrière de la planche à aiguilles 123A comporte des conformations d'appui et de positionnement pour les talons 125 des aiguilles,
- la face avant de la planche à aiguilles 123B comporte des alésages 128 traversant la face avant de la planche à aiguilles 123B et dans lesquels sont emmanchées les aiguilles 124.
- un dispositif de serrage 201 tend à rapprocher les deux faces de la planche à aiguilles 123A et 123B l'une vers l'autre, assurant de ce fait l'assemblage solidaire des aiguilles 124 avec la planche 123.

Le dispositif de serrage 201 illustré à la figure 5 fait appel à une technique pneumatique couramment utilisée sur les machines d'aiguilletage, et permet de changer la face arrière de l'unité d'aiguilletage 200A pour adapter cette unité d'aiguilletage à différentes inclinaisons de frappe. On peut envisager l'usage d'autres dispositifs de serrage, tels que par exemple un serrage à douilles, permettant d'obtenir l'assemblage solidaire des aiguilles 124 sur la planche à aiguille 123.

Le choix d'aiguilles 124 de même longueur est généralement privilégié car permettant un approvisionnement et une gestion moins coûteuse pour l'entreprise. Toutefois on peut envisager des aiguilles 124 de longueurs inégales, ou d'autres dispositions de la planche à aiguilles 123.

La face arrière de la planche à aiguilles 123A est choisie généralement avec une surface sensiblement parallèle au plan de défilement de l'âme 3, de sorte que les pointes des aiguilles soient dans un plan parallèle au plan de défilement, comme illustré pour l'unité d'aiguilletage 200A.

L'unité d'aiguilletage 200B peut différer de l'unité d'aiguilletage 200A en ce qu'elle peut comprendre une planche à aiguilles sans face arrière 123A, en particulier dans le cas où ses aiguilles sont orientées perpendiculairement au plan de défilement de l'âme 3 tel qu'illustré aux figures 4 et 5. On peut également envisager d'autres dispositions des pointes des aiguilles 124, notamment dans le cas ou l'on souhaite des caractéristiques mécaniques non homogènes du panneau composite 1, par exemple en créant des zones sur lesquelles la pénétration des aiguilles sera différente de celle pratiquée sur le reste du panneau.

Chaque unité d'aiguilletage 200A, 200B et leurs aiguilles 124 sont réglables en orientation par rapport aux peaux 21, l'orientation des aiguilles et donc des unités pouvant notamment être oblique par rapport aux peaux. Pour chaque unité 200A, 200B, l'orientation des aiguilles de l'unité est définie par un angle de frappe, aussi appelée inclinaison de frappe de l'unité ou des aiguilles de l'unité. L'angle de frappe est définit autour d'un axe sensiblement parallèle à la surface des peaux et au plan de défilement 300 et sensiblement perpendiculaire à la direction de défilement F1, cet angle de frappe étant nul pour une orientation des aiguilles parallèles à la surface des peaux et au plan de défilement et pointant dans la même direction que la direction de défilement F1. L'angle de frappe est déterminé parmi une étendue de réglage choisie, notamment pour des raisons d'encombrement, comprise entre quarante cinq degrés et cent trente cinq degrés par rapport à la surface des peaux. On peut bien sûr considérer une plus vaste étendue de réglage.

Dans l'exemple de la figure 4 l'unité d'aiguilletage 200A est orientée suivant un angle de cent trente cinq degrés par rapport à la surface des peaux, et l'unité d'aiguilletage 200B est orientée suivant un angle de quatre-vingt dix degrés. Pour chaque unité 220A, 200B, les aiguilles 124 de l'unité sont en position de retrait, et ont pour fonction de venir en prise avec des fibres de la nappe 21 située du côté de l'âme où se trouvent les aiguilles considérées, et d'enfoncer ces fibres dans l'âme 3 dans un mouvement de pénétration suivant l'orientation selon laquelle pointe les aiguilles 124.

L'exemple de la figure 5 illustre les aiguilles 124 lorsqu'elles sont en état de pénétration maximale dans le volume intercalaire occupé par l'âme 3. Les pointes des aiguilles de l'unité d'aiguilletage 200B situé d'un côte de l'âme atteignent la nappe 21 situé du côté opposé de l'âme. Les pointes des aiguilles de l'unité d'aiguilletage 200A atteignent la partie médiane de l'âme 3. On peut envisager des pénétrations plus ou moins profondes que celles représentées, notamment des pénétrations atteignant ou transperçant la nappe 21 opposée pour favoriser une interpénétration des fibres enfoncées avec la nappe opposée.

L'unité d'aiguilletage 200A présente un biseau 302 le long d'un bord 303 qui est transversal au plan de défilement 300 et qui fait face au plan de défilement. Ledit biseau 302 est déterminé de manière à ce que l'unité d'aiguilletage 200A ne rentre pas en contact avec la nappe 21 située du même coté relativement à l'âme lorsque ses aiguilles 124 sont en état de pénétration maximale. L'unité d'aiguilletage 200B représentée dans l'exemple des figures 4, 5 présente également un biseau. On peut envisager, notamment dans le cas d'une frappe à quatre-vingt dix degrés par rapport aux peaux, utiliser une planche sans biseaux avec une surface plus importante pour l'implantation des aiguilles.

L'exemple de la figure 7 donne une représentation de la répartition des touffes ponctuelles 71A, 71B dans l'âme 3 obtenue selon la disposition des unités d'aiguilletages représentées aux figures 4, 5, 6. Les fibres enfoncées présentent au moins deux orientations différentes. Des fibres appartiennent à un premier ensemble de touffes de fibres 71A enfoncées par l'unité 200A et présentant une orientation oblique par rapport aux peaux 21, et des fibres appartiennent à un deuxième ensemble de touffes de fibres 71B enfoncées par l'unité 200B et présentant une orientation sensiblement perpendiculaire aux nappes de fibres 21.

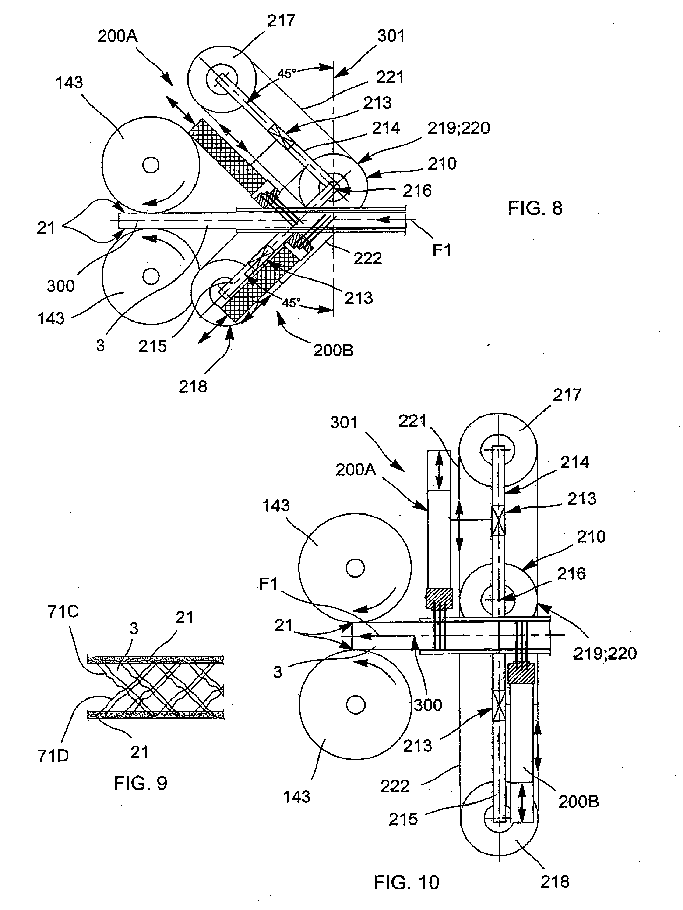

On va maintenant décrire en référence aux figures 8, 9, 10 et 11 un dispositif de commande 210 appartenant au mode de réalisation préférentiel de dispositif de fabrication selon l'invention, et agencé pour actionner les aiguilles de chaque unité d'aiguilletage avec un mouvement de frappe alternatif et selon une certaine inclinaison de frappe.

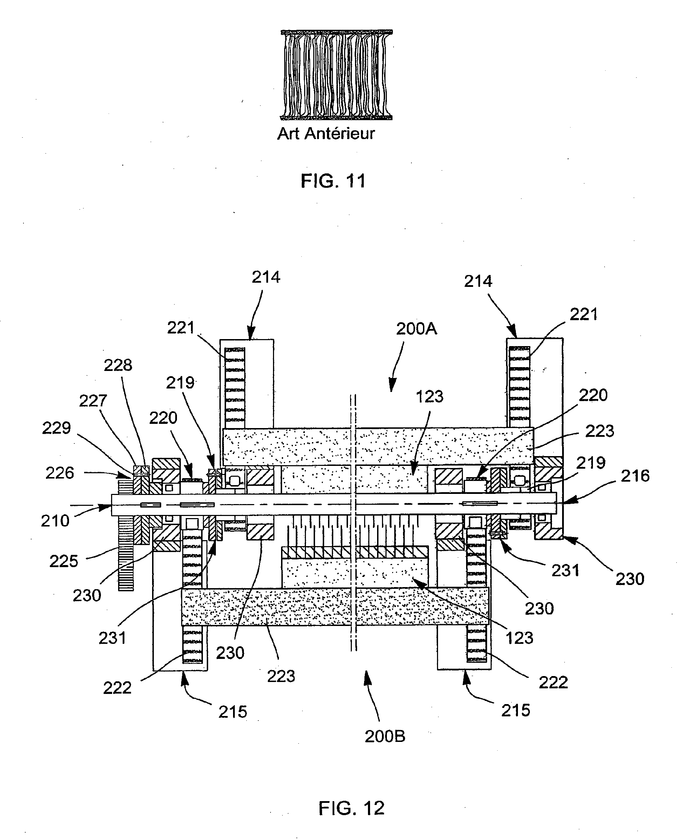

Dans l'exemple de la figure 8, les deux unités d'aiguilletage 200A, 200B situées de part et d'autre de l'âme 3 forment un angle de cent trente cinq degrés par rapport aux peaux 21. Les deux unités d'aiguilletage 200A, 200B sont guidées dans leur mouvement de translation chacune par une liaison glissière 213 avec respectivement les pièces orientables 214 et 215. Une extrémité de chaque pièce orientable 214, 215 est en liaison pivot temporaire autour de l'axe de l'arbre d'entrainement 216, de manière à autoriser le réglage de l'orientation (et donc de l'inclinaison de frappe) de chacune des unités d'aiguilletage 200A, 200B. Comme le montre la figure 12, l'arbre d'entrainement 216 est disposé d'un côté du plan de défilement 300, parallèlement au plan de défilement 300 et transversalement par rapport à la direction de défilement F1 de l'âme 3 et des peaux. L'autre extrémité de chaque pièce orientable 214 et 215 est équipée d'une poulie de renvoi respectivement 217, 218. L'arbre d'entrainement est lié suivant une position angulaire réglable à deux poulies d'entrainement 219 et 220 homologues, lesquelles permettent l'entrainement de deux corroies respectivement 221, 222. La tension des courroies 221, 222 est maintenue par les poulies de renvoi respectivement 217, 218. Les unités d'aiguilletage 200A, 200B sont liées de manière rigide aux courroies respectivement 221, 222, sur les brins tendus des dites courroies lors de la frappe de chaque unité d'aiguilletage.

L'unité d'aiguilletage 200A, située du même côté que l'arbre d'entrainement 216 et la boucle 221 relativement au plan de défilement 300 du produit (c'est-à-dire du panneau en cours de fabrication) est située à l'extérieur de la boucle formée par la courroie 221. L'unité d'aiguilletage 200B, située du même côté que la boucle 222 relativement au plan de défilement 300, est de préférence située à l'intérieur de la boucle 222 formée par les courroies qui l'entraînent. Ce dispositif permet de réaliser une frappe simultanée des unités d'aiguilletage 200A et 200B sans risque de collision de leurs aiguilles 124, particulièrement lorsque l'inclinaison d'une des unités est relativement éloignée de quatre-vingt-dix degrés par rapport aux peaux 21. Mais il est également possible de placer la dite unité d'aiguilletage 200A du côté intérieur de la boucle formée par ses courroies d'entraînement, ou encore l'unité d'aiguilletage 200B du côté extérieur de la boucle formée par ses courroies d'entraînement.

Dans une phase de réglage du dispositif de commande 210, on commence par effectuer le réglage d'inclinaison des pièces orientables 214 et 215 autour de l'arbre 216, puis l'on règle la position angulaire des poulies d'entrainement 219, 220 autour de l'arbre 216 de façon que la frappe soit simultanée malgré le déphasage que tendent à induire les réglages d'inclinaison. On peut envisager une frappe alternée, notamment dans le cas d'une frappe face à face.

Dans une solution privilégiée, les courroies 219, 220 seront des courroies dites crantées. On peut cependant envisager d'autres solutions d'entrainement telles que par exemple l'utilisation d'une unique courroie, ou au contraire de plusieurs courroies pour chaque unité d'aiguilletage, mais aussi l'utilisation d'une chaîne ou d'un système bielle-manivelle.

La pénétration des deux unités d'aiguilletage 200A, 200B se fait vers l'entrée des nappes, c'est-à-dire dans le sens inverse du mouvement d'avance F1 des nappes. La tension des nappes au moment de l'aiguilletage est assurée par les cylindres d'entraînement 143, décrits par la suite, avec un étirage possible des nappes entre les cylindres d'entraînement 143 et la zone d'aiguilletage.

On peut envisager la pénétration des deux unités d'aiguilletage 200A, 200B vers la sortie des nappes, c'est-à-dire dans le sens du mouvement d'avance F1 des nappes. Dans ce cas on peut prévoir un système de contrôle annexe permettant de prévenir le risque de détendre les nappes.

L'exemple de la figure 9 est une vue partielle en coupe de la répartition des touffes ponctuelles 71C, 71D dans l'âme 3 obtenue selon la disposition des unités d'aiguilletages représentée à la figure 8. Des fibres appartiennent à un premier ensemble de touffes de fibres 71C enfoncées par l'unité 200A et présentant une orientation oblique par rapport aux peaux 21, et des fibres appartiennent à un deuxième ensemble de touffes de fibres 71D enfoncées par l'unité 200B et présentant une orientation oblique par rapport aux peaux 21 et inclinées en sens contraire par rapport aux fibres du premier ensemble de touffes.

L'exemple de la figure 10 représente une variation de la figure 8, dans laquelle les deux unités d'aiguilletage 200A, 200B forment toutes deux un angle de quatre-vingt-dix degrés par rapport aux peaux 21. La répartition des fibres obtenue est représentée à la figure 11. Dans le cadre de cette disposition angulaire particulière des deux unités d'aiguilletage 200A, 200B on obtient un panneau selon l'art antérieur avec une répartition des fibres comparable à celle décrite dans le document EP 1 686 210 A1.

La figure 12 est une vue en coupe latérale du dispositif de commande 210 selon le plan 301 de la figure 8. Comme le montre la figure 12, les unités d'aiguilletage 200A, 200B comprennent toutes deux une planche à aiguilles 123 reliée rigidement à une poutre 223. Ces poutres 223 sont reliées en leurs extrémités avec les deux colonnes des pièces orientables 214 et 215 de manière à former une liaison glissière. Le guidage en rotation de l'arbre d'entrainement 216 ainsi que des pièces orientables 214 et 215 se fait par l'intermédiaire de quatre paliers 230 liés au bâti du dispositif de fabrication.

Dans l'exemple de la figure 12, un bras de levier 225 actionne en rotation l'arbre d'entrainement 216 par l'intermédiaire d'un dispositif de réglage 226. Le dispositif de réglage 226 est constitué de deux disques 227, 228 immobilisés entre eux dans l'exemple par un dispositif de vissage 229. On peut envisager l'utilisation d'autres dispositifs d'immobilisation comme par exemple l'emploi de goupilles. Le disque 227 est lié rigidement au bras de levier 225, tandis que le disque 228 est lié rigidement à l'arbre 216.

Le bras de levier est lui-même actionné par le pied de bielle d'un unique excentrique non représenté.

Dans l'exemple de la figure 12, le mouvement de l'arbre d'entrainement 216 est transmis à l'unité d'aiguilletage 200A ou 200B par l'intermédiaire de respectivement deux courroies 221 ou deux courroies 222, elles-mêmes entrainées par respectivement deux poulies d'entrainement 219 ou deux poulies d'entrainement 220. Les poulies d'entrainement 220 sont solidaires de l'arbre 216, de sorte que le dispositif de réglage 226 assure le réglage de pénétration l'unité d'aiguilletage 200B, en particulier en fonction de l'inclinaison de frappe de l'unité d'aiguilletage 200B.

Deux dispositifs de réglage 231, comparables au dispositif de réglage 226, permettent d'assurer le réglage angulaire des courroies 221 relativement à l'arbre de transmission 216, assurant de ce fait le réglage de pénétration l'unité d'aiguilletage 200A. Il y a donc interdépendance du réglage des deux unités d'aiguilletage 200A, 200B. On peut cependant envisager l'utilisation de dispositifs de réglage différents, notamment des dispositifs de réglage indépendants.

On peut également envisager que, dans le cas d'un nombre d'unités d'aiguilletage supérieur à deux, certaines unités d'aiguilletage soient réglables de manière conjointe.

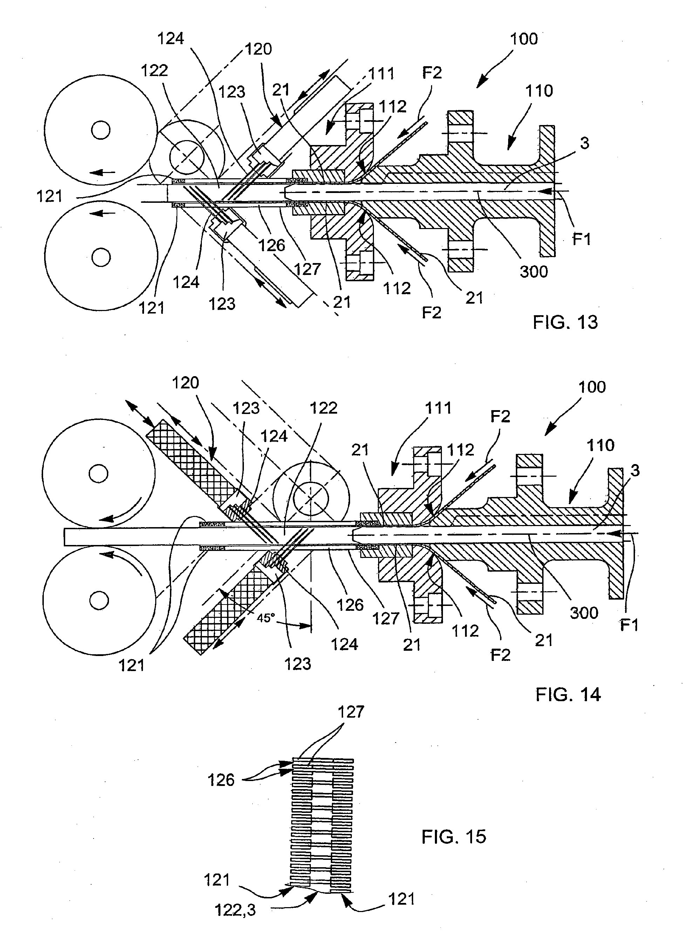

On va maintenant décrire en référence aux figures 13, 14 et 15, les moyens d'introduction 100 appartenant au mode de réalisation préférentiel de dispositif de fabrication selon l'invention. Les moyens d'introduction 100 comprennent un guide 110 pour l'introduction de l'âme 3 dans un mouvement d'avance (flèche F1, précédemment appelée direction de défilement) vers la gauche de la figure 13, et un guide 111 placé en aval du guide 110 pour introduire l'empilement comprenant l'âme 3 placée entre deux nappes de fibres 21. Les guides 110 et 111 définissent entre eux deux fentes d'introduction 112, inférieure et respectivement supérieure, pour introduire selon les flèches F2 chacune des nappes 21 sur les faces supérieure et respectivement inférieure de l'âme 3 à l'entrée du guide 111.

Les moyens d'introduction 100 représenté à la figure 13 sont associés à l'outillage d'aiguilletage 120 destiné à assembler l'âme 3 avec les deux nappes 21. L'outillage d'aiguilletage 120 comprend à son tour :
- deux débourreurs 121 qui définissent entre eux un trajet d'aiguilletage 122 (compris dans le plan de défilement 300) constituant la continuation du trajet à travers le guide 111;
- les deux planches à aiguilles 123 situées de part et d'autre, respectivement, du trajet d'aiguilletage 122, et portant chacune des aiguilles 124; les pointes des aiguilles 124 sont capables de pénétrer dans le trajet d'aiguilletage 122 à travers des fentes 126 formées entre des lamelles 127 composant les débourreurs 121 dans la zone où se trouvent les aiguilles 124.

Sur la figure 13, l'outillage d'aiguilletage 120 est agencé de manière à orienter la pénétration des aiguilles 124 vers la sortie des nappes, c'est-à-dire en partie dans le sens du mouvement d'avance F1 des nappes. Cette disposition préférentielle permet de détendre la structure mécanique du panneau en cours de fabrication vers l'aval de l'outillage d'aiguilletage relativement à la direction de défilement, mais nécessite une certaine tension des matériaux fibreux à l'amont de l'outillage d'aiguilletage. Cette solution est favorable à l'introduction d'intercalaires poudreux dans le panneau, et semble diminuer les gènes d'accès aux éléments de réglage des tables et des déboureurs du dispositif de fabrication selon l'invention.

Sur la figure 14, l'outillage d'aiguilletage 120 est agencé de manière à orienter la pénétration des aiguilles 124 vers l'entrée des nappes, c'est-à-dire en partie dans le sens inverse au mouvement d'avance F1 des nappes. Cette disposition permet de maintenir une certaine tension sur le panneau en cours de fabrication depuis les cylindres d'entrainement 143, mais pourrait être défavorable pour l'alimentation d'intercalaires poudreux.

Chaque planche à aiguilles 123 est fixée à un moyen d'actionnement en un mouvement de va-et-vient suivant une direction préalablement choisie, de sorte que les pointes des aiguilles 124 pénètrent dans le trajet d'aiguilletage 122 et en ressortent. L'avance de l'assemblage de l'âme 3 et des nappes 21 selon la flèche F1 est synchronisée avec le mouvement des aiguilles 124 de sorte que l'assemblage avance lorsque les aiguilles 124 sont dégagées du trajet d'aiguilletage 122 et l'avance de l'assemblage est stoppée lorsque les aiguilles 124 sont saillantes dans le trajet d'aiguilletage 122. Dans l'exemple représenté, les aiguilles 124 situées d'un côté du trajet d'aiguilletage 122 sont décalées par rapport aux aiguilles 124 situées de l'autre côté, ce qui permet de synchroniser les deux planches à aiguilles 123 de façon que toutes les aiguilles 124 soient simultanément engagées dans le trajet d'aiguilletage 122 et en soient simultanément dégagées pour permettre l'avance de l'assemblage.

Les aiguilles 124 ont pour fonction de venir en prise avec des fibres de la nappe 21 située du côté où se trouvent les aiguilles considérées, et d'enfoncer ces fibres dans l'âme 3 de l'assemblage. Lorsqu'elles sont en état de pénétration maximale, comme représenté à la figure 13, les pointes des aiguilles atteignent la nappe 21 opposée. Ainsi, dans ce mode de réalisation, les fibres entraînées par les aiguilles sont enfoncées jusqu'à atteindre la nappe 21 opposée. Il est même possible de faire en sorte que les aiguilles transpercent la nappe opposée, totalement ou partiellement, pour favoriser une interpénétration des fibres enfoncées avec la nappe opposée.

Lorsque les aiguilles 124 atteignent la nappe 21 opposée, les aiguilles peuvent également de façon alternative ou complémentaire, assurer l'enfoncement des fibres par traction des fibres de la nappe 21 opposée au côté où se trouvent les aiguilles considérées. En particulier, des aiguilles ayant des barbes orientées pour tirer des fibres vont pénétrer plus facilement dans le produit en cours d'aiguilletage. Ceci peut être particulièrement favorable compte tenu de la direction de pénétration oblique selon l'invention.

D'une manière générale, la disposition des aiguilles sur les planches 123, la cadence de frappe des aiguilles 124 et le pas d'avance du produit selon la flèche F1 sont choisis en combinaison pour obtenir le motif de fibres enfoncées désiré.

Après la sortie de l'outillage d'aiguilletage 120, le produit semi-fini est découpé en panneaux élémentaires, par des coupes transversales avec un outillage de coupe connu non représenté. Dans un poste de moulage, les panneaux découpés sont introduits dans un moule où est injectée la matière liante telle que résine. Cette étape classique en soi est également non représentée, car connue dans la fabrication des panneaux composites dits «sandwich ». Le moule peut être plan pour réaliser un panneau plan, ou au contraire non plan pour simultanément déformer le produit semi-fini plan en un panneau fini ayant une forme non plane désirée.

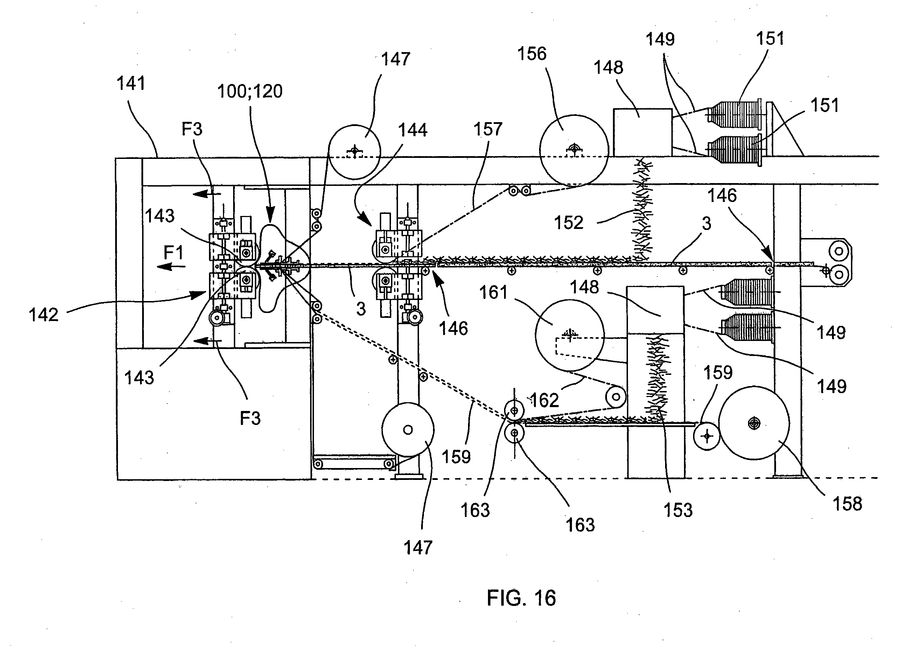

La figure 16 représente un exemple de dispositif de fabrication selon l'invention.

On ne re-décrira les moyens d'introduction 100 et l'outillage d'aiguilletage 120 qui peuvent être identiques à ceux de la figure 13. A la sortie de l'outillage 120, le produit semi-fini passe entre les cylindres d'entraînement 143 d'un appareillage d'avance pas à pas 142, entraînés par des servo-moteurs. La périphérie des cylindres 143 comporte une garniture de type connu pour assurer un couplage positif avec le produit semi-fini sortant de l'aiguilletage. Un autre appareillage d'avance 144 de même type est placé en amont des moyens d'introduction 100 pour l'entraînement pas à pas des matériaux avant leur entrée dans le guide 110 (voir figure 13). Dans la situation de début de fabrication représentée à la figure 16, où le bord avant du produit semi-fini n'a pas encore atteint l'appareillage d'avance aval 142, l'entraînement est assuré par l'appareillage amont 144. Par la suite, les deux appareillages 142 et 144 fonctionnent de façon synchronisée pour faire avancer le produit lorsque, comme déjà exposé en référence à la figure 13, les aiguilles 124 de l'outillage sont dégagées du produit. En outre, dans l'exemple représenté à la figure 16, les matériaux constitutifs de l'âme 3 du produit sont pré-coupés transversalement en des emplacements 146 qui correspondent aux bords transversaux futurs des panneaux à fabriquer. On facilite ainsi la coupe ultérieure des panneaux après aiguilletage et avant moulage. Pour être sûr que la coupe ultérieure coïncide avec les emplacements prédécoupés 146, ceux-ci présentent un léger écartement. Grâce à la présence des deux appareillages d'avance 142, 144, chaque segment prédécoupé de l'âme 3 est entraîné positivement par l'un et/ou l'autre des deux appareillages d'avance de sorte que l'écartement des pré-découpages 146 est maintenu jusqu'au site de coupe ultérieur (non représenté). Des flèches F3 symbolisent que l'un des appareillages d'avance (142) peut être réglé en ce qui concerne sa position parallèlement à la direction F1 d'avance du produit, en particulier pour faire en sorte que l'écartement entre les deux appareillages d'avance 142, 144 soit inférieur à la longueur entre pré-découpages 146 successifs.

Le bâti 141 du dispositif de fabrication représenté à la figure 16 est capable de supporter de chaque côté du plan de défilement de l'âme 3, une bobine de mat préconsolidé 147 pour que ce mat constitue une nappe de fibres 21 arrivant par les fentes 112 suivant les flèches F2 (voir figure 13). Ce mode de fonctionnement du dispositif nécessite de pouvoir fabriquer ou se procurer le mat préconsolidé. Il nécessite également une manutention des bobines 147 dont la consommation peut être relativement rapide étant donné que le procédé selon l'invention est capable d'une production horaire très élevée. En outre, la modification d'une fabrication en cours en ce qui concerne la composition et/ou la largeur de l'armature fibreuse des peaux nécessite de disposer d'autres bobines 147 d'un mat ayant la structure, le dimensionnement et/ou la composition désirée. On voit en particulier que la mise au point d'une fabrication particulière peut être relativement laborieuse avec les mats 147.

C'est notamment pour cette raison que le dispositif représenté à la figure 16 comprend en outre de chaque côté du plan de défilement de l'âme 3, en amont des moyens 100 et de l'outillage 120, un appareillage de coupe 148 qui transforme des filaments continus 149 provenant de bobines 151 en des fibres coupées 152 déposées en éparpillement sur la face supérieure de l'âme 3 en amont de l'appareillage d'avance amont 144, et respectivement en des fibres coupées 153 destinées à être introduites sous forme éparpillée du côté inférieur de l'âme 3 à travers la fente d'introduction inférieure 112 (figure 13). Les filaments 149 sont typiquement des filaments inorganiques (ce que l'on appelle un « roving »). Les fibres 152, 153 ont une longueur de préférence supérieure à 3 à 4 fois l'épaisseur de l'âme 3. Ainsi, dans une application typique, la longueur des fibres est de 50 à 100 mm.

On profite de l'effet de gravité pour déposer directement les fibres 152 sur la face supérieure de l'âme 3. Le bâti 141 supporte en outre, au dessus de l'âme 3, une bobine 156 d'un matériau en bande 157 ayant sensiblement la même largeur que l'âme 3, et que l'on vient positionner au dessus des fibres 152 déposées, en particulier pour réaliser une préfixation des fibres 152 sur l'âme 3. Le matériau en bande 157 est introduit avec les fibres 152 précédemment déposées, entre les cylindres d'entraînement de l'appareillage d'avance amont 144, de façon que les cylindres de l'appareillage 144 tassent les fibres 152 entre l'âme 3 et le matériau en bande 157. L'ensemble pénètre dans les moyens 100 à travers le guide 110 (figure 13). Dans ce mode de fonctionnement, par conséquent, le guide 110 sert à introduire non seulement l'âme 3 mais également l'armature fibreuse de la peau supérieure du futur panneau.

En dessous du plan de défilement de l'âme 3, le bâti 141 supporte une autre bobine 158 pour un matériau en bande 159 pouvant être identique au matériau en bande 157 mais dont le trajet de circulation est tel qu'il reçoit les fibres coupées 153 tombant de l'appareillage de coupe inférieur 148. Ensuite, le matériau en bande 159 est guidé vers la fente d'introduction 112 inférieure (voir figure 13). Le bâti 141 supporte encore une bobine 161 pour un troisième matériau en bande 162 venant se placer au dessus des fibres coupées 153 déposées sur le matériau en bande 159. Les fibres 153 sont prises en sandwich et tassées entre les matériaux en bande 159 et 162 lorsque l'ensemble passe entre deux rouleaux de guidage et de pincement 163. L'ensemble pénètre ensuite dans les moyens 100 par la fente inférieure 112.

Les deux matériaux en bande 157 et 159 qui forment les deux faces extérieures du produit avant l'enduction peuvent typiquement être un voile consolidé léger, de par exemple 15 à 30 g/m². Le voile consolidé est par exemple constitué de fibres thermo-soudées, par exemple en polypropylène, mais il peut également s'agir d'un voile formé de filaments (« spun »), ou encore d'un tissu, d'un non-tissé, d'un canevas, en fibres inorganiques, organiques, végétales, etc, destiné à avoir une fonction de renfort des peaux, et/ou d'autres fonctions spécifiques souhaitées. Le matériau en bande 162 qui va se trouver ente les fibres inférieures 153 et la face inférieure de l'âme 3 peut soit être d'une nature semblable à l'une des celles décrites pour les matériaux 157 et 159, ou encore, par exemple, être un matériau beaucoup plus lourd, de 150 à 300 g/m² par exemple, ayant une fonction avantageuse de garder un certain gonflant jusqu'au stade du moulage pour drainer la résine d'imprégnation. Un tel non-tissé gonflant peut être constitué de fibres en polypropylène. Il existe également des tissus drainants ayant sensiblement les mêmes propriétés, que l'on peut aussi utiliser.

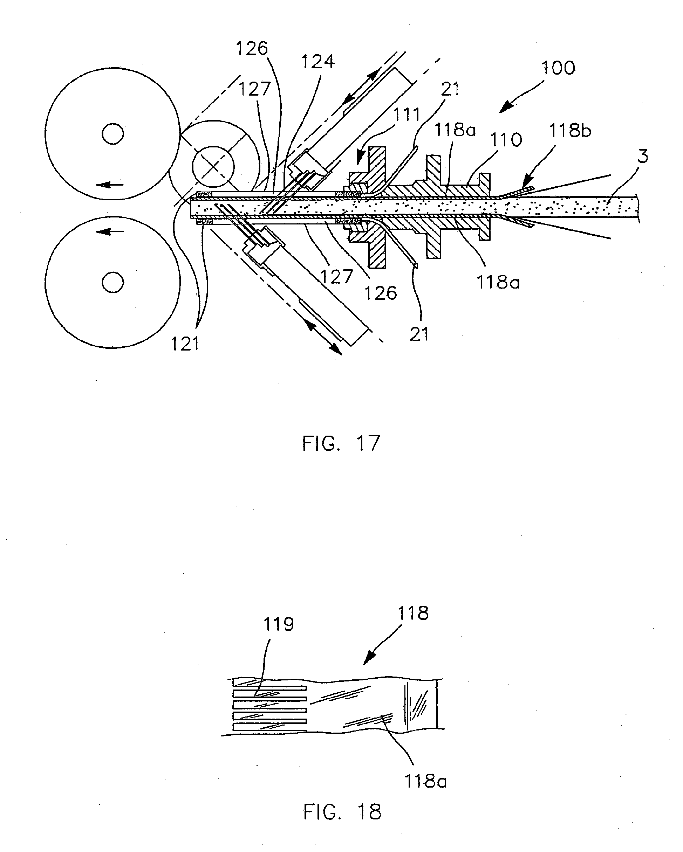

Dans l'exemple représenté aux figures 17 et 18, le dispositif de fabrication, qui ne sera décrit que pour ses différences par rapport à celui de la figure 13, comprend des peignes 118 entre lesquels est formé le passage pour l'âme 3 dans le guide 110. Les peignes 118 comprennent à l'intérieur du guide 110 et 111 une paroi continue 118a. En amont du guide 110, les peignes 118 forment l'un avec l'autre un convergent 118b qui sert à guider le matériau dans le passage du guide 110. Les peignes 118 se prolongent par des dents 119 qui coïncident avec les lamelles 127 des débourreurs 121. Les espaces entre les dents 119 coïncident avec les fentes 126 entre lamelles. Les armatures fibreuses 21 passent entre peigne et débourreur. Les aiguilles 124 passent dans les fentes 126 entre lamelles 127, traversent les armatures fibreuses 21, puis passent entre les dents 119 des peignes 118 pour s'enfoncer dans l'âme 3. La fonction des peignes 118 est de soutenir les structures fibreuses 21 pendant l'aiguilletage pour éviter que les efforts d'aiguilletage compriment l'âme 3, notamment lorsque celle-ci est constituée d'une mousse relativement légère. A leurs extrémités aval, les dents 119 sont séparées les unes des autres et forment ainsi des ouvertures par lesquelles les fibres enfoncées par l'aiguilletage peuvent sortir du peigne lors du déplacement du produit vers l'aval.

Bien entendu, l'invention n'est pas limitée aux exemples décrits et représentés.

En particulier, le dispositif de fabrication selon l'invention peut comprendre une seule unité d'aiguilletage. On peut même envisager de fabriquer avec un tel dispositif un panneau comprenant des touffes de fibres enfoncées selon différentes orientations, par une exécution de plusieurs passes d'aiguilletage du panneau séparées par au moins un pivotement du panneau dans son propre plan.

Si l'on utilise des fibres ayant par nature ou par enduction préalable des aptitudes à la thermofusion, il est possible de réaliser un panneau sans procéder à une imprégnation par injection de résine dans un moule, simplement en passant le produit semi-fini dans un moule que l'on porte à une température suffisante pour faire apparaître le phénomène de thermofusion de tout ou partie des fibres.

L'âme 3 peut elle-même être, au moins en partie, fibreuse.

Il est également possible de réaliser un panneau dont les deux faces sont profilées de manière non plane.

Les dimensions d'un panneau selon l'invention peuvent être choisies très librement en fonction des domaines d'application qui peuvent être : garnitures intérieures pour l'automobile, panneaux de carrosserie pour véhicules utilitaires, pièces de carrosserie ou plates-formes de châssis pour l'automobile, panneaux pour le bâtiment, pour l'ameublement, panneaux isolants, panneaux de toiture, panneaux pour les garnitures intérieures de véhicule ferroviaires, d'avions ou de bateaux, vantaux de porte, etc. Des épaisseurs de 10mm à 150mm sont, non-limitativement, réalisables. Les matières plastiques utilisées sont, au choix, des thermoplastiques ou des thermodurcissables. La largeur des panneaux, relativement à la direction F1, peut en principe aller de 1,5 mètre, jusqu'à éventuellement 10m.

Dans tous les exemples représentés, les composants de l'âme 3 sont de forme stable à leur entrée dans le dispositif de fabrication.

Toutefois, les différents systèmes de guidage et de soutien décrits et représentés, notamment les peignes 118, permettent d'envisager l'utilisation d'une âme 3 ayant une certaine souplesse ou flexibilité, qui permet ensuite un moulage avec une forme complexe ou une déformation importante, par exemple pour réaliser des pièces pour l'automobile ou des éléments de forme semblablement complexe.

Il est également possible de prévoir, conformément au document EP 0 594 700 B1, l'emploi de dispositifs de maintient mécanique lors d'opérations d'aiguilletage, notamment suivant des lignes de liaison longitudinales, permettant si désiré d'introduire un composant intercalaire dans les espaces longitudinaux ménagés par l'action mécanique entre les lignes de liaison longitudinales déjà réalisées. Lors d'opérations d'aiguilletage, ces dispositifs de maintient mécanique servent à maintenir un écartement des peaux, et servent d'enclume lors de l'aiguilletage des touffes de fibres reliant les peaux.

Il peut y avoir à l'entrée du dispositif de fabrication des moyens pour traiter au moins un composant de l'âme 3 et/ou de l'une au moins des peaux.

## Revendications

1. Panneau composite (1), comprenant deux peaux fibreuses (2), et une âme (3) placée dans un volume intercalaire entre les peaux et reliée aux peaux par une matière liante solidifiée (22), dans lequel des fibres de liaison (7) originaires de l'une au moins des peaux ont été enfoncées dans l'âme, **caractérisé en ce qu'**une partie au moins des fibres enfoncées présente au moins une orientation oblique par rapport à l'une au moins des peaux.

2. Panneau selon la revendication 1, **caractérisé en ce que** les fibres enfoncées présentent au moins deux orientations différentes.

3. Panneau selon la revendication 2, **caractérisé en ce que** les deux orientations comprennent une orientation sensiblement perpendiculaire à l'une au moins des peaux.

4. Panneau selon la revendication 2, **caractérisé en ce que** les deux orientations sont inclinées en sens contraire l'une de l'autre par rapport aux peaux.

5. Panneau selon la revendication 2, **caractérisé en ce que** des fibres enfoncées selon une première orientation sont sensiblement parallèles à un premier plan d'orientation (304), des fibres enfoncées selon une deuxième orientation sont sensiblement parallèles à un deuxième plan d'orientation (305), le premier plan d'orientation (304) et le deuxième plan d'orientation (305) étant transverses l'un à l'autre, les fibres selon la première orientation et les fibres selon la deuxième orientation étant toutes sensiblement parallèles à un plan d'alignement (306) transverse aux plans d'orientation.

6. Panneau selon l'une quelconque des revendications 2 à 5, **caractérisé en ce que** les fibres enfoncées sont regroupées en touffes (71) situées en des sites (45) où se trouve également de la matière liante (74), des touffes (71) de fibres enfoncées selon une première orientation étant chacune sécantes ou tangentes à une touffe de fibres enfoncées selon une deuxième orientation.

7. Dispositif pour fabriquer un panneau selon l'une des revendications 1 à 6, **caractérisé en ce qu'**il comprend :
- des moyens d'introduction (100) pour introduire une âme (3) entre deux peaux fibreuses (21) dans un trajet d'aiguilletage selon une direction de défilement (F1),
- au moins une unité d'aiguilletage (200A, 200B) comprenant des aiguilles (124) et agencée pour enfoncer des fibres (7) de l'une au moins des peaux (21) dans l'âme, l'au moins une unité d'aiguilletage comprenant des moyens pour actionner (210) ses aiguilles obliquement selon une inclinaison de frappe par rapport à un plan de défilement (300) de l'âme (3) et des peaux.

8. Dispositif selon la revendication 7, **caractérisé en ce que** l'au moins une unité d'aiguilletage comprend des moyens pour régler l'inclinaison de frappe suivant laquelle ses aiguilles sont actionnées, par rapport audit plan de défilement.

9. Dispositif selon la revendication 7 ou 8, **caractérisé en ce qu'**il comprend deux unités d'aiguilletage disposées de part et d'autre du plan de défilement.

10. Dispositif selon la revendication 9, **caractérisé en ce que** les deux unités sont réglables en inclinaison de frappe indépendamment l'une de l'autre.

11. Dispositif selon la revendication 10, **caractérisé en ce que** les deux unités sont commandées à partir d'un même arbre (216), le dispositif comportant des moyens pour régler un calage des cycles de frappe des deux unités l'une par rapport à l'autre, en particulier en fonction de leur inclinaison de frappe respective.

12. Dispositif selon l'une des revendications 7 à 11, **caractérisé en ce que** les pointes des aiguilles de l'au moins une unité d'aiguilletage sont dans un plan sensiblement parallèle au plan de défilement.

13. Dispositif selon la revendication 12, **caractérisé en ce que** les aiguilles sont d'égale longueur et ont un talon appuyé contre une face arrière (123A) d'une planche à aiguilles (123), cette face arrière étant généralement sensiblement parallèle au plan de défilement (300).

14. Dispositif selon la revendication 13, **caractérisé en ce que** la face arrière de la planche à aiguilles comporte des conformations d'appui et de positionnement pour les talons des aiguilles.

15. Dispositif selon l'une des revendications 7 à 14, **caractérisé en ce que** l'au moins une unité d'aiguilletage (200A) présente un biseau (302) le long d'un bord (303) qui est transversal au plan de défilement (300) et qui fait face au plan de défilement.

16. Dispositif selon l'une des revendications 7 à 15, **caractérisé en ce que** les moyens d'actionnement comprennent au moins une courroie (221) passant autour d'une poulie (219) portée par un arbre (216) disposé transversalement par rapport à la direction de défilement de l'âme (3) et des peaux, l'au moins une unité d'aiguilletage comprenant au moins un équipage mobile (213, 123, 223), portant les aiguilles, fixé à un brin de la courroie, et **en ce que** l'inclinaison de frappe est réglable par basculement de l'unité d'aiguilletage autour de l'axe de l'arbre (216).

17. Dispositif selon la revendication 16, **caractérisé en ce que** les moyens d'actionnement comprennent une seconde courroie (222) passant autour d'une seconde poulie (220) portée par le même arbre (216) et accouplée à un équipage mobile (213, 123, 223) d'une seconde unité d'aiguilletage (200B) agissant de l'autre côté du plan de défilement (300).

18. Dispositif selon la revendication 17, **caractérisé en ce que** l'arbre (216) est situé d'un côté du plan de défilement, l'équipage mobile situé du même côté du plan que l'arbre (216) est essentiellement situé à l'extérieur de la boucle formée par la courroie correspondante (221), et l'autre équipage mobile est essentiellement situé à l'intérieur de la boucle formée par la courroie correspondante (222).

19. Procédé pour réaliser un panneau composite (1) selon l'une des revendications 1 à 6, **caractérisé en ce que**, par aiguilletage, on enfonce obliquement des touffes de fibres de l'une au moins des peaux dans l'âme (3).

20. Procédé selon la revendication 19, **caractérisé en ce qu'**on enfonce des touffes de fibres suivant au moins deux orientations différentes, en particulier par exécution de deux passes d'aiguilletage séparées par un pivotement du panneau dans son propre plan, des fibres enfoncées selon une première orientation étant sensiblement parallèles à un premier plan d'alignement sensiblement perpendiculaire à la surface d'au moins une des peaux, des fibres enfoncées selon une deuxième orientation étant sensiblement parallèles à un deuxième plan d'alignement sensiblement perpendiculaire à la surface de cette même au moins une des peaux, le premier plan d'alignement et le deuxième plan d'alignement étant transverses l'un à l'autre.

## Patentansprüche

1. Verbundplatte (1), umfassend zwei faserstoffhaltige Außenschichten (2) und einen Kern (3), der in einem Zwischenraum zwischen den Außenschichten angeordnet und durch ein verfestigtes Bindematerial (22) mit den Außenschichten verbunden ist, wobei aus wenigstens einer der Außenschichten stammende Verbindungsfasern (7) in den Kern eingezogen worden sind, **dadurch gekennzeichnet, dass** wenigstens ein Teil der eingezogenen Fasern wenigstens eine schräge Ausrichtung gegenüber wenigstens einer der Außenschichten aufweist.

2. Platte nach Anspruch 1, **dadurch gekennzeichnet, dass** die eingezogenen Fasern wenigstens zwei unterschiedliche Ausrichtungen aufweisen.

3. Platte nach Anspruch 2, **dadurch gekennzeichnet, dass** die beiden Ausrichtungen eine Ausrichtung umfassen, die zu wenigstens einer der Außenschichten im Wesentlichen senkrecht verläuft.

4. Platte nach Anspruch 2, **dadurch gekennzeichnet, dass** die beiden Ausrichtungen gegenüber den Außenschichten in entgegengesetzter Richtung zueinander geneigt sind.

5. Platte nach Anspruch 2, **dadurch gekennzeichnet, dass** in einer ersten Ausrichtung eingezogene Fasern zu einer ersten Ausrichtungsebene (304) im Wesentlichen parallel verlaufen, in einer zweiten Ausrichtung eingezogene Fasern zu einer zweiten Ausrichtungsebene (305) im Wesentlichen parallel verlaufen, wobei die erste Ausrichtungsebene (304) und die zweite Ausrichtungsebene (305) quer zueinander sind, wobei die Fasern in der ersten Ausrichtung und die Fasern in der zweiten Ausrichtung alle im Wesentlichen parallel zu einer zu den Ausrichtungsebenen quer verlaufenden Fluchtebene (306) sind.

6. Platte nach einem der Ansprüche 2 bis 5, **dadurch gekennzeichnet, dass** die eingezogenen Fasern zu Büscheln (71) gruppiert sind, die an Stellen (45) gelegen sind, an denen sich auch Bindematerial (74) befindet, wobei Büschel (71) von in einer ersten Ausrichtung eingezogenen Fasern jeweils ein Büschel von in einer zweiten Ausrichtung eingezogenen Fasern schneidend oder berührend sind.

7. Vorrichtung zur Herstellung einer Platte nach einem der Ansprüche 1 bis 6, **dadurch gekennzeichnet, dass** sie umfasst:
- Einführungsmittel (100) zum Einführen eines Kerns (3) zwischen zwei faserstoffhaltigen Außenschichten (21) auf einer Nadelungsstrecke entlang einer Laufrichtung (F1),
- wenigstens eine Nadelungseinheit (200A, 200B), die Nadeln (124) umfasst und die dazu eingerichtet ist, Fasern (7) von wenigstens einer der Außenschichten (21) in den Kern einzuziehen, wobei die wenigstens eine Nadelungseinheit Mittel umfasst, um ihre Nadeln gegenüber einer Laufebene (300) des Kerns (3) und der Außenschichten in einer Schlagneigung schräg zu betätigen (210).

8. Vorrichtung nach Anspruch 7, **dadurch gekennzeichnet, dass** die wenigstens eine Nadelungseinheit Mittel umfasst, um die Schlagneigung, in der ihre Nadeln betätigt werden, gegenüber der Laufebene einzustellen.

9. Vorrichtung nach Anspruch 7 oder 8, **dadurch gekennzeichnet, dass** sie zwei Nadelungseinheiten, die auf beiden Seiten der Laufebene angeordnet sind, umfasst.

10. Vorrichtung nach Anspruch 9, **dadurch gekennzeichnet, dass** die beiden Einheiten unabhängig voneinander in der Schlagneigung einstellbar sind.

11. Vorrichtung nach Anspruch 10, **dadurch gekennzeichnet, dass** die beiden Einheiten mittels einer gleichen Welle (216) angetrieben werden, wobei die Vorrichtung Mittel umfasst, um eine optimale Einstellung der Schlagzyklen der beiden Einheiten zueinander, insbesondere in Abhängigkeit von ihrer jeweiligen Schlagneigung, einzustellen.

12. Vorrichtung nach einem der Ansprüche 7 bis 11, **dadurch gekennzeichnet, dass** die Spitzen der Nadeln von der wenigstens einen Nadelungseinheit sich in einer zu der Laufebene im Wesentlichen parallelen Ebene befinden.

13. Vorrichtung nach Anspruch 12, **dadurch gekennzeichnet, dass** die Nadeln eine gleiche Länge aufweisen und eine an einer Rückseite (123A) eines Nadelbrettes (123) abgestützte hintere Nase haben, wobei diese Rückseite im Allgemeinen zu der Laufebene (300) im Wesentlichen parallel verläuft.

14. Vorrichtung nach Anspruch 13, **dadurch gekennzeichnet, dass** die Rückseite des Nadelbrettes Ausformungen zum Abstützen und Positionieren für die hintere Nasen der Nadeln umfasst.

15. Vorrichtung nach einem der Ansprüche 7 bis 14, **dadurch gekennzeichnet, dass** die wenigstens eine Nadelungseinheit (200A) eine Abschrägung (302) entlang einer Kante (303) aufweist, die zu der Laufebene (300) quer verläuft und die der Laufebene gegenüberliegt.

16. Vorrichtung nach einem der Ansprüche 7 bis 15, **dadurch gekennzeichnet, dass** die Betätigungsmittel wenigstens einen Riemen (221) umfassen, der um eine Rolle (219) verläuft, welche von einer zu der Laufrichtung des Kerns (3) und der Außenschichten quer angeordneten Welle (216) getragen ist, wobei die wenigstens eine Nadelungseinheit wenigstens ein die Nadeln tragendes bewegliches Teil (213, 123, 223) umfasst, das an einem Trum des Riemens befestigt ist, und dass die Schlagneigung durch Kippen der Nadelungseinheit um die Achse der Welle (216) einstellbar ist.

17. Vorrichtung nach Anspruch 16, **dadurch gekennzeichnet, dass** die Betätigungsmittel einen zweiten Riemen (222) umfassen, der um eine von der gleichen Welle (216) getragene zweite Rolle (220) verläuft und der mit einem beweglichen Teil (213, 123, 223) einer auf der anderen Seite der Laufebene (300) wirkenden zweiten Nadelungseinheit (200B) gekoppelt ist.

18. Vorrichtung nach Anspruch 17, **dadurch gekennzeichnet, dass** die Welle (216) auf einer Seite der Laufebene gelegen ist, das bewegliche Teil, das auf der gleichen Seite der Ebene wie die Welle (216) gelegen ist, sich im Wesentlichen außerhalb der durch den entsprechenden Riemen (221) gebildeten Schleife befindet und das andere bewegliche Teil sich im Wesentlichen innerhalb der durch den entsprechenden Riemen (222) gebildeten Schleife befindet.

19. Verfahren zur Herstellung einer Verbundplatte (1) nach einem der Ansprüche 1 bis 6, **dadurch gekennzeichnet, dass** Faserbüschel von wenigstens einer der Außenschichten durch Nadelung schräg in den Kern (3) eingezogen werden.

20. Verfahren nach Anspruch 19, **dadurch gekennzeichnet, dass** Faserbüschel in wenigstens zwei unterschiedlichen Ausrichtungen eingezogen werden, insbesondere durch Ausführen von zwei Nadelungsdurchgängen, die durch ein Verschwenken der Platte in ihrer eigenen Ebene getrennt sind, wobei in einer ersten Ausrichtung eingezogene Fasern zu einer ersten Fluchtebene, die zu der Oberfläche wenigstens einer der Außenschichten im Wesentlichen senkrecht verläuft, im Wesentlichen parallel verlaufen, wobei in einer zweiten Ausrichtung eingezogene Fasern zu einer zweiten Fluchtebene, die zu der Oberfläche dieser gleichen wenigstens einen der Außenschichten im Wesentlichen senkrecht verläuft, im Wesentlichen parallel verlaufen, wobei die erste Fluchtebene und die zweite Fluchtebene quer zueinander sind.

## Claims

1. Composite panel (1), comprising two fibrous skins (2), and a web (3) placed in an inner volume between the skins and linked thereto by a solidified bonding material (22), in which linking fibres (7) originating from at least one of the skins have been rammed into the web, **characterized in that** at least a portion of the rammed fibres has at least one oblique orientation with respect to at least one of the skins.

2. Panel according to claim 1, **characterized in that** the rammed fibres have at least two different orientations.

3. Panel according to claim 2, **characterized in that** the two orientations comprise an orientation substantially perpendicular to at least one of the skins.

4. Panel according to claim 2, **characterized in that** the two orientations are each inclined in the opposite direction to the other with respect to the skins.

5. Panel according to claim 2, **characterized in that** fibres rammed in a first orientation are substantially parallel to a first plane of orientation (304), fibres rammed in a second orientation are substantially parallel to a second plane of orientation (305), the first plane of orientation (304) and the second plane of orientation (305) being transverse to each other, the fibres in the first orientation and the fibres in the second orientation all being substantially parallel to a plane of alignment (30) transverse to the planes of orientation.

6. Panel according to any one of claims 2 to 5, **characterized in that** the rammed fibres are grouped in tufts (71) situated at locations (45) where bonding material (74) is also present, tufts (71) of fibres rammed in a first orientation, each being secant or tangent to a tuft of fibres rammed in a second orientation.

7. Device for producing a panel according to one of claims 1 to 6, **characterized in that** it comprises:
- insertion means (110) for inserting a web (3) between two fibrous skins (21) in a needlepunching path (122) in a direction of travel (F1);
- at least one needlepunching unit (200A, 200B) comprising needles (124) and arranged for ramming fibres (7) from at least one of the skins (21) into the web, the at least one needlepunching unit comprising means for actuating (210) its needles obliquely in a strike inclination with respect to a plane of travel (300) of the web (3) and of the skins.

8. Device according to claim 7, **characterized in that** the at least one needlepunching unit comprises means for adjusting the strike inclination according to which its needles are actuated, with respect to said plane of travel.

9. Device according to claim 7 or 8, **characterized in that** it comprises two needlepunching units arranged on either side of the plane of travel.

10. Device according to claim 9, **characterized in that** the two units have adjustable strike inclination independently of each other.

11. Device according to claim 10, **characterized in that** the two units are controlled from one and the same shaft (216), the device including means for adjusting a setting of the strike cycles of the two units in relation to each other, in particular as a function of their respective strike inclination.

12. Device according to one of claims 7 to 11, **characterized in that** the needle tips of the at least one needlepunching unit are in a plane substantially parallel to the plane of travel.

13. Device according to claim 12, **characterized in that** the needles are of equal length and have a heel pressed against a rear face (123A) of a needle board (123), this rear face being generally substantially parallel to the plane of travel (300).

14. Device according to claim 13, **characterized in that** the rear face of the needle board includes shaping for the support and positioning of the needle heels.

15. Device according to one of claims 7 to 14, **characterized in that** at least one needlepunching unit (200A) has a bevel (302) along an edge (303) that is transverse to the plane of travel (300) and which faces the plane of travel.

16. Device according to one of claims 7 to 15, **characterized in that** the actuation means comprise at least one belt (221) passing around a pulley (219) borne by a shaft (216) arranged transversally with respect to the direction of travel of the web (3) and of the skins, the at least one needlepunching unit comprising at least one mobile equipment (213, 123, 223) bearing the needles, fixed to one side of the belt, and **in that** the strike inclination is adjustable by rocking the needlepunching unit about the axis of the shaft (216).

17. Device according to claim 16, **characterized in that** the actuation means comprise a second belt (222) passing around a second pulley (220) borne by the same shaft (216) and coupled to a mobile equipment (213, 123, 223) of a second needlepunching unit (200B) acting on the other side of the plane of travel (300).

18. Device according to claim 17, **characterized in that** the shaft (216) is situated on one side of the plane of travel, the mobile equipment situated on the same side of the plane as the shaft (216) is essentially situated outside the loop formed by the corresponding belt (221), and the other mobile equipment is essentially situated inside the loop formed by the corresponding belt (222).

19. Method for producing a composite panel (1) according to one of claims 1 to 6, **characterized in that** tufts of fibres from at least one of the skins are rammed by needlepunching obliquely into the web (3).

20. Method according to claim 19, **characterized in that** tufts of fibres are rammed in at least two different orientations, in particular by performing two needlepunching passes separated by pivoting the panel within its own plane, fibres rammed in one orientation being substantially parallel to a first plane of alignment substantially perpendicular to the surface of at least one of the skins, fibres rammed in a second orientation being substantially parallel to a second plane of alignment substantially perpendicular to the surface of this same at least one of the skins, the first plane of alignment and the second plane of alignment being transverse to each other.
